# EUROPÄISCHE PATENTSCHRIFT

(11) **EP 0 346 601 B1**
(45) Veröffentlichungstag und Bekanntmachung des Hinweises auf die Patenterteilung: **14.04.1993**
(21) Anmeldenummer: 89107824.8
(22) Anmeldetag: 29.04.1989
(51) Int. Cl.: G01P 5/00

(54) **Verfahren und Vorrichtung zur Messung der Strömungsgeschwindigkeit, insbesondere in einem Windkanal**
Method and apparatus for measuring fluid flow velocity, in particular in a wind tunnel
Procédé et dispositif de mesure de la vitesse d'écoulement d'un fluide, en particulier dans un tunnel aérodynamique

(30) Priorität: 06.05.1988 DE 3815474
(43) Veröffentlichungstag der Anmeldung: 20.12.1989
(73) Patentinhaber: DEUTSCHE FORSCHUNGSANSTALT FÜR LUFT- UND RAUMFAHRT e.V., 53111 Bonn (DE)
(72) Erfinder: Bütefisch, Karl-Aloys, Dr. Dipl.-Phys., D-3406 Bovenen (DE)
(74) Vertreter: Rehberg, Elmar, Dipl.-Ing.

(56) Entgegenhaltungen:
- DE-A- 3 009 383
- TECHNISCHES MESSEN, Band 48, Nr. 5, Mai 1981, Seiten 159-163, München, DE; A. SCHNETTLER: "Optoelektronische Demodulation von Laser-Doppler-Signalen"
- N.T.I.S. TECH NOTES, Juli 1987, Seite 629, Springfield, VA, US; US ARMY MATERIEL COMMAND: "Optical-data processing with liquid-crystal TV"
- ICIASF '89, Göttingen, 18. - 21. September 1989, Seiten 555-561, CH2762-3-89-0000-0555; K.A. BÜTEFISCH: "Fast optical LDA burst analyzer"

## Beschreibung

Die Erfindung geht aus von einem Verfahren zur Messung der Strömungsgeschwindigkeit, insbesondere in einem Windkanal, bei dem ein sich kreuzendes Lichtstrahl-Paar ein Meßvolumen ausleuchtet und ein an mit der Strömung mitbewegten Teilchen gestreutes dopplerverschobenes Streulicht registriert und in elektrische Signale umgewandelt wird und bei dem die Dopplerfrequenz des registrierten Streulichts als Maß für die Strömungsgeschwindigkeit verwendet wird.

Solch ein bekanntes Verfahren wird als Laser-Doppler-Anemometrie bezeichnet. Die Laser-Doppler-Anemometrie bietet die Möglichkeit, Geschwindigkeiten berührungslos und damit störungsfrei zu messen. Es kann sowohl die Strömungsgeschwindigkeit der Luft, beispielsweise in einem Windkanal, als auch die Geschwindigkeit von festen Körpern mit diesem Verfahren gemessen werden. Als physikalische Grundlage wird der Doppler-Effekt herangezogen. Der Doppler-Effekt ist bekannt, so daß hier nur grundlegend darauf eingegangen zu werden braucht. Er beschreibt das physikalische Phänomen, daß die Frequenz einer sich bewegenden, Wellen aussendenden Quelle von einem stillstehenden Beobachter mit einer Frequenzverschiebung wahrgenommen wird. Da die Geschwindigkeit der Quelle proportional der Frequenzverschiebung ist, läßt sich aus der Frequenzverschiebung die Geschwindigkeit der Quelle ermitteln. Dieser Doppler-Effekt stellt die physikalische Grundlage der Laser-Doppler-Anemometrie dar.

Bei dem im Stand der Technik bekannten Verfahren wird ein Meßvolumen von einem sich kreuzenden Lichtstrahl-Paar, zumeist als Licht eines Lasers ausgeleuchtet. An Teilchen, die sich entweder von vornherein in der Strömung befinden oder aber der Strömung zugeführt wurden, wird der Lichtstrahl gestreut. Das Streulicht, welches gegenüber dem Lichstrahl dopplerverschoben ist, wird registriert und in ein elektrisches Signal umgewandelt. Dieses elektrische Signal besteht typischerweise aus mehreren Wellenzügen. Zur Ermittlung der Strömungsgeschwindigkeit muß das elektrische Signal, welches in der Fachsprache als Burst bezeichnet wird, hinsichtlich der Frequenz ausgewertet werden. Dabei ist, um die Meßzeit möglichst kurz zu halten, eine schnelle Auswertung erwünscht. Das Verfahren soll weiterhin auch bei relativ hohen Turbulenzgraden der Strömung oder aber auch bei Messung in Wandnähe, also beim Auftreten von störendem Streulicht (Rauschen), verwendbar sein. Um dies zu erreichen ist es bekannt, das elektrische Signal des registrierten Streulichts mit Hilfe einer Fast-Fourier-Transformation in Sinus- und Kosinusterme der Grundfrequenz und deren Harmonische zu zerlegen. Die dominante Frequenz des elektrischen Signals des registrierten Streulichts ergibt sich dann aus der Komponente mit der höchsten Intensität. Diese Fast-Fourier-Transformation wird auf einem Rechner durchgeführt. Die dafür benötigte Rechenzeit liegt im Bereich von einer Sekunde. Da eine zuverlässige Aussage über die Strömungsgeschwindigkeit nur durch Mittlung über mehrere Bursts erreicht werden kann, ergeben sich relativ lange Meßzeiten, die das Verfahren unattraktiv machen. Zur Verkürzung dieser Meßzeiten ist es auch bekannt, die Fast-Fourier-Transformation mit speziell dafür entwickelten Prozessoren durchzuführen. Die Erhöhung der Rechengeschwindigkeit wird u.a. auch dadurch erreicht, daß vom gesamten Burst nur eine begrenzte Stützstellenanzahl, üblicherweise 64, aus dem über der Zeit dargestellten elektrischen Signal des registrierten Streulichts Verwendung findet. Dies ist insoweit nachteilig, als daß dadurch bei schlechter Qualität der Signale, also bei starkem Rauschen, keine verläßlichen Ergebnisse mehr erzielt werden können. Eine entsprechende Erhöhung der Stützstellenzahl würde wiederum mit einer Verlängerung der Rechenzeit einhergehen. Weiterhin nachteilig sind solche Prozessoren relativ teuer.

Es ist weiterhin bekannt, die Nulldurchgänge des elektrischen Signals des registrierten Streulichts zu messen. Dabei finden sogenannte Counter Verwendung. Mit diesen Countern können bis zu mehreren 100.000 Messungen/Sek. ausgewertet werden, was einer sehr schnellen Auswertung entspricht. Nachteilig bei der Verwendung von Countern ist, daß eine eindeutige Zählung möglich sein muß, d.h. also, daß das elektrische Signal nicht verrauscht sein darf. Messungen in Wandnähe oder bei großem Turbulenzgrad können mit diesen Countern nicht ausgewertet werden. Insbesondere kann ein hoher Turbulenzgrad der Strömung nicht von rauschbedingten Schwankungen der Signale unterschieden werden.

Aus der DE-OS 30 09 384 und dem Artikel "Optoelektronische Demodulation von Laser-Doppler-Signalen" A. Schnettler in Technisches Messen 48. Jahrgang 1981, Heft 5 ist eine Vorrichtung Zur Durchführung eines Verfahrens der eingangs beschriebenen Art bekannt. Diese Vorrichtung weist eine Lichtquelle, eine erste, den Lichtstrahl in ein sich kreuzendes Lichtstrahl-Paar aufspaltende und im Meßvolumen fokussierende sowie das Streulicht aufnehmende Optik, eine das registrierte Streulicht in elektrische Signale umwandelnde Konvertereinheit und eine die elektrischen Signale weiterverarbeitende und geschwindigkeitdarstellende Auswerteeinheit mit einem von einem kohärenten Lichtstrahl durchleuchteten, über die elektrischen Signale des Streulichts ansteuerbaren Lichtmodulator, einer zweiten Optik und einem optischen Sensor auf. Hierbei ist der Lichtmodulator der Auswerteeinheit als optoelektronischer Demodulator ausgebildet. Als Beispiel für einen optoelektronischen Demodulator wird in den oben bezeichneten Druckschriften eine Bragg-Zelle genannt, deren Kristal entsprechend den elektrischen, aus dem Streulicht gewonnenen Signalen eine örtliche Kompression erfährt. An dieser örtlichen komprimierten Materie findet eine Reflexion des kohärenten Lichtstrahls statt. Die Lage des reflektierten Lichtstrahls zu den durch die Bragg-Zelle hindurchtretenden Lichtstrahls enthält nun eine Information über die in den elektrischen Signalen enthaltene Dopplerfrequenz und damit über die Geschwindigkeit des betrachteten Teilchens.

Der Erfindung liegt die Aufgabe zugrunde, ein Verfahren zur Messung der Strömungsgeschwindigkeit der eingangs beschriebenen Art so weiterzubilden, daß Messungen auch bei schlechtem Signal-Rauschabstand zuverlässig und mit möglichst geringem Zeitaufwand durchgeführt werden können.

Erfindungsgemäß wird dies dadurch erreicht, daß die elektrischen Signale des registrierten Streulichts in Form eines Bildes dargestellt werden, daß das Bild von einem kohärenten Lichtstrahl durchleuchtet wird, daß der kohärente Lichtstrahl in einer Fourier-Ebene fokussiert wird und somit ein ein Punktemuster aufweisendes Fourier-transformiertes Bild der elektrischen Signale erzeugt wird und daß das Fourier-transformierte Bild aufgenommen und weiterverarbeitet wird. Im Gegensatz zu dem bekannten Verfahren wird die Auswertung der Bursts also nicht mehr in einem Rechner bzw. Prozessor durchgeführt, sondern es erfolgt eine optische Auswertung. Dazu werden die elektrischen Signale des registrierten Streulichts in Form eines Bildes dargestellt. Dieses Bild wird von einem kohärenten Lichstrahl durchleuchtet. Der kohärente Lichtstrahl ist in der Fourier-Ebene fokusiert, so daß sich in dieser Ebene das Fouriertransformierte Bild des elektrischen Signals des registrierten Streulichts ergibt. Wie bereits oben erwähnt, weist das Bild der elektrischen Signale des registrierten Streulichts typischerweise mehrere Wellenzüge auf. Das Fouriertransformierte Bild ist dann ein Punktemuster in einer Linie oder zwei sich unter einem sehr spitzen Winkel schneidenden Linien. Um einen mittleren Punkt sind in äquidistanten Abständen entlang der Linien weitere Punkte angeordnet. Der Abstand dieser Punkte von dem mittleren Punkt bzw. der Abstand der Punkte untereinander ist proportional zu der Strömungsgeschwindigkeit, so daß dieser Abstand zur Berechnung der Strömungsgeschwindigkeit herangezogen werden kann. Auch ist die Gesamtheit der im Fourier-transformierten Bild enthaltenen Punkte zur weiteren Auswertung heranzuziehen, womit eine Erhöhung der Genauigkeit erreicht werden kann.Die optische Auswertung ergibt den Vorteil, daß die für die Auswertung zur Verfügung stehende Stützstellenzahl wesentlich erhöht ist. Dabei ist die Stützstellenzahl lediglich von der Auflösung des Bildes des elektrischen Signals des registrierten Streulichts abhängig. Die Stützstellenzahl liegt bei der optischen Auswertung im Bereich von 30.000 Stützstellen im Vergleich zu 64 Stützstellen bei der Auswertung mit dem im Stand der Technik bekannten Prozessor. Durch die Erhöhung der Stützstellenzahl ist sichergestellt, daß auch elektrische Signale mit einem großen Rauschanteil, also mit schlechtem Signal/Rauschabstand, zuverlässig und schnell ausgewertet werden können. Es ergibt sich somit die Möglichkeit, Messungen in Gebieten bzw. unter Bedingungen durchzuführen, die mit dem im Stand der Technik bekannten Verfahren nicht mehr zuverlässig ausgewertet werden können. Für solche Messungen, vor allem in teuren Windkanälen, beispielsweise in Grenzschichten, an Wänden, Flugzeugteilen oder dgl., besteht ein sehr großes Bedürfnis, da gerade die dortigen Bedingungen oftmals ausschlaggebend sind. Mit den herkömmlichen Meßmethoden konnten diese Messungen nicht zufriedenstellend durchgeführt werden, da teils die Umströmung durch beispielsweise Sonden gestört wird oder aber bei der Laser-Doppler-Anemometrie, der Signal/Rauschabstand zu schlecht war. Solche Messungen sind zuverlässig erst durch das erfindungsgemäße Verfahren ermöglicht. Weiterhin vorteilhaft ist, daß die Auswertung der elektrischen Signale des registrierten Streulichts trotz der hohen Stützstellenzahl sehr schnell, nämlich mit Lichtgeschwindigkeit, erfolgt. Damit ist es möglich bei gleichbleibender Anzahl von Messungen, die Meßzeit erheblich zu reduzieren. Damit werden durch das neue Verfahren zwei ansich gegensätzliche Forderungen, nämlich einerseits die Messung auch bei schlechtem Signal/Rauschabstand und damit die Erhöhung der Stützstellenzahl und andererseits die Verkürzung der pro Messung erforderlichen Zeit, gleichzeitig erfüllt. Auch ist die Betriebssicherheit erheblich erhöht. Dies erklärt sich damit, daß die Auswertung quasi zeitgleich mit dem Auge verfolgt bzw. überprüft werden kann. Komplizierte elektrische Bauelemente sind nicht erforderlich. Ein eventuell auftretender Fehler ist sofort sichtbar und kann ohne Zeitverzögerung behoben werden.

Die elektrischen Signale können breitbandig gefiltert und/oder in binäre Signale umgewandelt werden und die breitbandig gefilterten und/oder binären Signale können als Bild dargestellt werden. Durch die Filterung der elektrischen Signale derart, daß nur ein bestimmter Frequenzbereich, beispielsweise von 0,1 MHz - 40 MHz, durchgelassen wird, erfolgt ein Unterdrücken von Rauschen bzw. eine Verbesserung des Signal/Rauschabstandes. So werden von vornherein ein bestimmtes Fremdlicht und andere störende Einflüsse vermieden. Die besondere Verarbeitung auf der Grundlage der optischen Auswertung erlaubt im Gegensatz zu den bisher bekannten Methoden die sehr breitbandige Filterung. Damit wird eine Verfälschung des Meßergebnisses verhindert,wenn große Geschwindigkeitsschwankungen zu messen sind. Die Darstellung der elektrischen Signale in Form von binären Signalen dient der einfachen und schnellen Darstellung als Bild.

Die elektrischen Signale und/oder die binären Signale können zwischengespeichert werden. Diese Zwischenspeicherung der Signale vor der eigentlichen Auswertung ermöglicht, daß nachträgiich noch eine spätere Auswertung vorgenommen werden kann. Dies kann dann erforderlich sein, wenn beispielsweise Fehler in der Auswerteeinheit festgestellt werden, die nicht sofort behoben werden können. Auch kann eine weitergehende Auswertung bzw. ein Verglelch mit anderen Messungen erwünscht sein. In diesen Fällen kann dann immer auf das ursprüngliche Signal zurückgegriffen werden.

Die Auflösung des Bildes kann, entsprechend der jeweils auftretenden Doppler-Frequenz, durch Darstellung in einer Ebene, die mit der optischen Achse des kohärenten Lichtstrahls einen Winkel größer oder kleiner als 90° bildet, erhöht und der zu messenden Geschwindigkeit angepaßt werden. Durch Veränderung des Winkels zwischen der Ebene, in der das Bild dargestellt wird, und dem kohärenten Lichtstrahl ändert sich in dem Bild der Abstand der einzelnen Perioden des elektrischen Signals des registrierten Streulichts. Diese Änderung erfolgt sinusförmig mit dem Drehwinkel. Bei Verringerung des Abstandes im Bild vergrößert sich der Abstand der einzelnen Punkte des Fourier-transformierten Bildes, so daß insgesamt eine Anpassung an die jeweils auftretenden Doppler-Frequenz erreicht wird.

Die Vorrichtung zur Durchführung des Verfahrens mit einer Lichtquelle, einer ersten, den Lichtstrahl im Meßvolumen fokussierenden und das Streulicht aufnehmenden Optik, einer das registrierte Streulicht in elektrische Signale umwandelnden Konvertereinheit und einer die elektrischen Signale weiterverarbeitenden und als Geschwindigkeiten darstellenden Auswertereinheit, die einen von einem kohärenten Lichtstrahl durchleuchteten, über die elektrischen Signale des Streulichts ansteuerbaren Lichtmodulator, eine zweite Optik und einen optischen Sensor aufweist, ist erfindungsgemäß dadurch gekennzeichnet, daß ein zur Darstellung der elektronischen Signale des Streulichts in Form eines transparenten Bild geeigneter Lichtmodulator, z. B. ein LCD-Schirm vorgesehen ist, daß die zweite Optik zur Fokussierung des aus dem Lichtmodulator austretenden Lichtstrahls in der Fourier-Ebene vorgesehen ist, daß der optische Sensor zum Empfang eines Fourier-transformierten Bilds in der Fourier-Ebene angeordnet ist und daß ein die Ausgangssignale des optischen Sensor aufnehmender und weiterverarbeitender Auswerterechner vorgesehen ist.

Als Lichtmodulator kann ein LCD-Schirm und ein dem LCD-Schirm vorgeschalteter LCD-Controller vorgesehen sein. Dies bietet den Vorteil, daß das elektrische Signal des reflektierten Streulichts direkt in real-time, d.h. ohne Zeitverzögerung, auf dem Lichtmodulator dargestellt wird. Dieser Lichtmodulator bietet weiterhin den vorteil, daß er relativ scharf zeichnet, d.h. also einen großen Kontrast besitzt. Weiterhin erfüllt der als LCD-Schirm ausgeführte Lichtmodulator die Forderung, daß eine Möglichkeit zur Durchleuchtung gegeben sein muß. Der LCD-Controller dient dazu, den LCD-Schirm entsprechend anzusteuern. Neben dieser bevorzugten Verwendung des LCD-Controllers ist es natürlich auch möglich, jeden anderen Lichtmodulator zu verwenden. So wäre es auch denkbar, als Lichtmodulator einen entsprechend ausgebildeten Reflektor oder ein Dia zu verwenden. Bei Verwendung eines Dias würden die elektrischen Signale des registrierten Streulichts auf einem nicht durchleuchtbaren Schirm abgebildet und mit einem normalen Fotoapparat abfotografiert. Das dann daraus entwickelte Dia ist ebenfalls als Lichtmodulator verwendbar.

Es ergibt sich hier jedoch der Nachteil, daß die Auswertung erst relativ spät erfolgen kann, d.h. also erst nach der Entwicklung des Dias. Dadurch können eventuell auftretende Fehler nicht sofort lokalisiert werden. Außerdem ist ein relativ großer Aufwand für die Herstellung der Dias erforderlich. Auch würde die Auswertungszeit derart erhöht werden, so daß letztendlich doch auf einen LCD-Schirm zurückgegriffen wird.

Der kohärente Lichtstrahl wird von einer zweiten Optik fokussiert, so daß der Brennpunkt des kohärenten Lichtstrahles in der Fourier-Ebene zu liegen kommt. Mit diesem Lichstrahl wird der Lichtmodulator durchleuchtet, so daß sich dann in der Fourier-Ebene das Fourier-transformierte Bild darstellt. Dieses Fourier-transformierte Bild wird von einem optischen Sensor aufgenommen. Als optischer Sensor eignet sich beispielsweise eine Zeilenkamera, die ihre Ausgangssignale dann direkt einem Auswerterechner zuführt. Auf Grund der optischen Fourier-Transformation und der Darstellung der elektrischen Signale auf einem LCD-Schirm ist immer sicher gestellt, daß die Linie der Punkte oder die Winkelhalbierende der beiden sich unter einem sehr spitzen Winkel schneidenden Punktelinien dieselbe Richtung einnehmen, sodaß die Zeilenkamera immer optimal ausgerichtet ist. Die sich unter einem sehr spitzen Winkel schneidenden Punktlinien können mit Hilfe einer zusätzlichen Zylinderlinse zu einer einfachen Punktelinie fokussiert werden. Damit ist zwar ein systematischer Fehler verbunden, der jedoch wegen des sehr spitzen Winkels vernachläßigt werden kann. Der Auswerterechner bekommt als Eingabegröße bereits den Abstand der einzelnen Punkte des Fourier-transformierten Bildes, so daß der Auswerterechner nur noch relativ einfache, recht schnell ablaufende Rechenschritte durchzuführen hat. Das könnte beispielsweise eine 1 d-Fourier-Transformation sein. Daraus ergibt sich der Vorteil, daß diese Aufgabe bereits von einem einfachen und damit preiswerten Rechner durchgeführt werden kann.

Die Auswerteeinheit kann einen Filter und/oder eine Digitalisierungseinheit aufweisen. Dadurch wird erreicht, daß nur Signale einer bestimmten Frequenz, nämlich der zu erwartenden Doppler-Frequenz, durchgelassen werden und somit andere Störeinflüsse ausgeschaltet werden. Die Digitalisierung der elektrischen Signale des registrieten Streulichts dient der Darstellung auf dem LCD-Schirm.

Vorteilhaft kann eine Speichervorrichtung zur Aufnahme der elektrischen Signale des Streulichts vorgesehen sein. Damit können die elektrischen Signale zwischengespeichert werden und für eine spätere, nochmalige Auswertung herangezogen werden.

An dem Lichtmodulator kann eine Winkelverstelleinrichtung vorgesehen sein, wobei die Winkelverstelleinrichtung eine mit dem Auswerterechner direkt verbundene Winkelmeßvorrichtung aufweisen kann. Damit ist die Möglichkeit gegeben, den Lichtmodulator um seine senkrechte Achse derart zu drehen, so daß sein Winkel zu der optischen Achse des kohärenten Lichtstrahls größer oder kleiner als 90° ist. Damit kann dann der Abstand der Punkte des Fourier-transformierten Bildes beeinflußt werden, wodurch dieser Abstand der jeweils auftretenden Doppler-Frequenz angepaßt werden kann. Die Winkelverstelleinrichtung kann eine Winkelmeßvorrichtung aufweisen, die direkt mit dem Auswerterechner verbunden ist. Die Winkelmeßvorrichtung ist erforderlich, wenn absolute Strömungsgeschwindigkeiten gemessen werden sollen. Bei relativen Messungen kann auf die Winkelmeßvorrichtung verzichtet werden, solange der Lichtmodulator bzw. der Winkel des Lichtmodulators zu der optischen Achse des kohärenten Lichtstrahls nicht verändert wird. Dabei braucht die Zeilenkamera nicht mit verstellt zu werden.

Als Lichtquelle kann ein Laser angeordnet sein und dem Laser kann zur Aufspaltung in den Lichtstrahl und den kohärenten Lichtstrahl ein Strahlenteiler und ein Umlenkspiegel zugeordnet sein.Der Lichtstrahl wird, wie bei LDA-Vorrichtungen üblich, durch die Optik in ein sich kreuzendes Lichtstrahl-Paar aufgespalten. Die Benutzung eines Lasers als Lichtquelle bietet den Vorteil, daß Licht hoher Energie und Kohärenz vorliegt. Durch die hohe Energie der Lichtquelle bzw. des Lichtstrahls wird von den Teilchen genügend Streulicht erzeugt, wodurch die weitere Auswertung erheblich vereinfacht wird. Mit Hilfe der Anordnung von Strahlenteiler und Umlenkspiegel kann der Lichtstrahl des Lasers in zwei Lichtstrahlen aufgespalten werden, so daß letztendlich nicht zwei, sondern nur ein Laser erforderlich ist.

Die Erfindung wird anhand von bevorzugten Ausführungsbeispielen weiter beschrieben: Es zeigen:
- Fig. 1: ein gemessenes elektrisches Signal des registrierten Streulichts;
- Fig. 2: einen schematischen Aufbau zur Durchführung des erfindungsgemäßen Verfahrens;
- Fig. 3: eine schematische Darstellung eines Fourier-transformierten Bildes;
- Fig. 4: ein simuliertes, verrauschtes, elektrisches Signal des Streulichts und
- Fig. 5: ein simuliertes, stark verrauschtes elektrisches Signal des Streulichts.

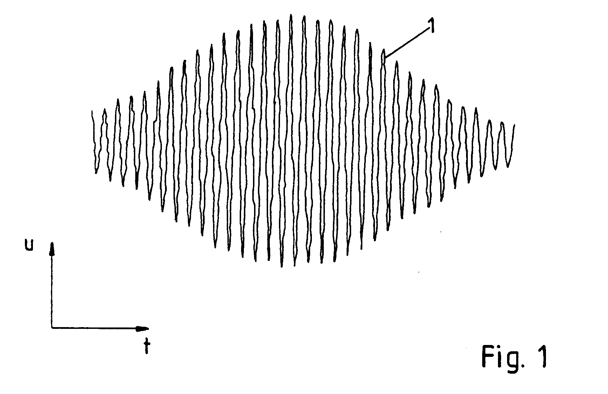

Fig. 1 zeigt ein gemessenes elektrisches Signal 1, welches in einem Diagramm Spannung U über der Zeit t aufgetragen ist. Das elektrische Signal 1 erhält man bei Messungen unter sehr guten Bedingungen. Das elektrische Signal 1, so wie es hier dargestellt ist, ist frei von störendem Rauschen oder dgl. Dieses elektrische Signal 1 ist nun hinsichtlich seiner Frequenz auszuwerten, um daraus die Strömungsgeschwindigkeit zu ermitteln.

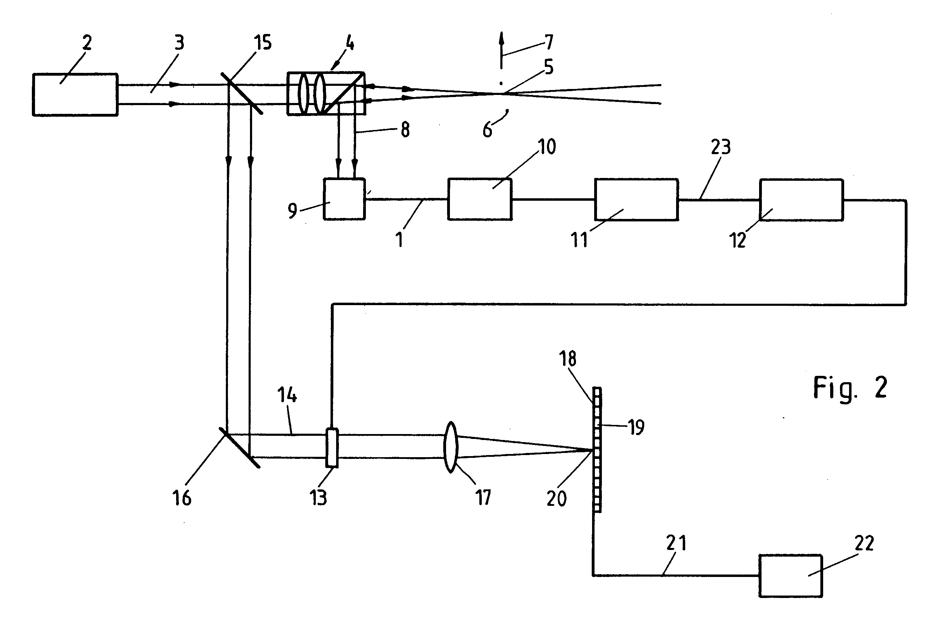

In Fig. 2 ist schematisch der Aufbau zur Ermittlung der Frequenz des elektrischen Signals 1 auf optischem Wege dargestellt. Eine Lichtquelle 2 erzeugt einen Lichtstrahl 3, der von einer ersten Optik 4, hier einer LDA- Optik, in ein sich kreuzendes Lichtstrahlen-Paar aufgespalten und in einem Meßvolumen 5 fokussiert ist. Durch das Meßvolumen 5 bewegen sich in der Strömung befindliche Teilchen 6 in Richtung eines Pfeils 7. Ein von den Teilchen 6 ausgehendes Streulicht 8 wird von der ersten Optik 4 aufgenommen und einer Konvertereinheit 9 zugeführt. In der Konvertereinheit 9 wird das Streulicht 8 in das elektrische Signal 1 gemäß Fig. 1 umgewandelt. Der Konvertereinheit 9 ist ein Filter 10 nachgeordnet. Der Filter 10 steht mit einer Digitalisierungseinheit 11 und diese mit einem LCD-Controller 12 in Verbindung.

Das elektrische Signal 1 wird nach Durchlaufen des Filters 10, der Digitalisierungseinheit 11 und des LCD- Controllers 12 auf einem Lichtmodulator 13 abgebildet. Bei dem hier aufgezeigten Ausführungsbeispiel ist als Lichtmodulator 13 ein LCD-Schirm vorgesehen. Es kann aber auch jeder andere Lichtmodulator 13 entsprechend verwendet werden. Der Lichtmodulator 13 wird von einem kohärenten Lichtstrahl 14 vollständig durchleuchtet. Dieser kohärente Lichtstrahl 14 wird mit Hilfe eines Strahlenteilers 15 und eines Umlenkspiegels 16, die in den Strahlengang des Lichtstrahls 3 eingebracht sind, erzeugt. Eine zweite Optik 17 fokussiert den kohärenten Lichtstrahl 14 in einer Fourier-Ebene 18. In der Fourier-Ebene 18 ist ein optischer Sensor 19 angeordnet, auf dem das auf dem LCD-Schirm abgebildete elektrische Signal als Fourier-transformiertes Bild 20 abgebildet wird. Als optischer Sensor 19 kann beispielsweise eine Zeilenkamera oder dgl. Verwendung finden. Es ist aber auch die Verwendung jedes anderen optischen Sensors 19 denkbar. Wichtig ist nur, daß der optische Sensor 19 ein Ausgangssignal 21 abgibt, welches proportional dem Abstand der Punkte des Fourier-transformierten Bildes 20 ist. Das Ausgangssignal 21 wird einem Auswerterechner 22 zugeführt, der daraus dann die Strömungsgeschwindigkeit der Teilchen 6 berechnet. Das Ergebnis des Auswerterechners 22 kann in beliebiger Form, beispielsweise in Form von Listen oder als graphischer Ausdruck ausgegeben werden.

Im folgenden wird die Funktion des Verfahrens und der Vorrichtung erläutert. Der aus der Lichtquelle 2 austretende Lichtstrahl 3 wird von der ersten LDA- Optik 4 in das sich kreuzende Lichtstrahlen-Paar aufgespalten und in dem Meßvolumen 5 fokussiert. In dem Meßvolumen 5 soll die Strömungsgeschwindigkeit der sich in Richtung des Pfeils 7 bewegende Strömung ermittelt werden. In der Strömung befinden sich Teilchen 6. Diese Teilchen 6 sind entweder die sich in jeder Strömung befindlichen Staubpartikel oder dgl. oder aber Teilchen 6, die der Strömung zugesetzt werden. An den Teilchen 6 wird der Lichtstrahl 3 gestreut. Aufgrund der den Teilchen 6 innewohnenden Geschwindigkeit ist die Frequenz des gestreuten Lichts, also des Streulichts 8, gegenüber der Frequenz des Lichtstrahls 3 frequenzverschoben, es tritt also der allgemein bekannte Doppler-Effekt auf. Das von den Teilchen 6 gelieferte Streulicht 8 wird von der ersten Optik 4 aufgefangen und einer Konvertereinheit 9 zugeführt. Die Konvertereinheit 9 wandelt das Streulicht 8 in das elektrische Signal 1 um. Die Konvertereinheit 9 kann weiterhin einen sogenannten Burst-Detektor aufweisen, der von vornherein die Auswertung nicht brauchbarer Signale unterdrückt. Das von der Konvertereinheit 9 erzeugte elektrische Signal 1 des Streulichts 8 wird dem Filter 10 zugeführt. Der Filter 10 läßt nur Signale, die in einem bestimmten Bereich liegen, hindurch, so daß durch den Filter 10 bereits eine gewisse Rauschunterdrückung stattfindet. Der Bereich des Filters 10, also der Frequenzbereich, ist entsprechend den jeweiligen Strömungsverhältnissen anzupassen. Bei Strömungsuntersuchungen im Windkanal liegt der Bereich der von dem Filter 10 durchgelassenen Frequenzen zwischen 0,1 MHz und 40 MHz. Das elektrische Signal 1, welches den Filter 10 passiert hat, wird der Digitalisierungseinheit 11 zugeführt. In der Digitalisierungseinheit 11 wird das elektrische Signal 1 entweder nur digitalisiert oder aber in digitale Einheitssignale umgeformt. Die digitalen Einheitssignale oder auch binären Signale 23 stellen in den Diagramm Spannung U über Zeit t eine Folge von Balken dar, deren Höhe durch die Spannung U und deren Breite durch das zeitliche Auflösungsvermögen der Digitalisierungseinheit 11 gegeben ist. Die Amplitude der binären Signale 23 sowie deren Erstreckung in Richtung der Zeitachse t kann variabel sein. In dem LCD- Controller 12, dem die binären Signale 23 zugeführt werden, findet die Aufarbeitung der binären Signale 23 derart statt, daß sie auf dem Lichtmodulator 13 entsprechend dargestellt werden. Die Digitalisierung der Signale in der Digitalisierungseinheit 11 bietet sich insbesondere dann an, wenn als Lichtmodulator 13 ein LCD-Schirm Verwendung findet. Es besteht aber prinzipiell auch die Möglichkeit die elektrischen Signale 1 direkt auf dem Lichtmodulator 13 darzustellen, d.h. also ohne vorherige Digitalisierung mit Hilfe der Digitalisierungseinheit 11. Der Lichtmodulator 13 und damit das elektrische Signal 1 bzw. das binäre Signal 23 des Streulichtes 8 wird von dem kohärenten Lichtstrahl 14 durchleuchtet. Der kohärente Lichtstrahl 14 kann aus einer separaten Lichtquelle gewonnen werden, oder aber wie hier in diesem Ausführungsbeispiel von der Lichtquelle 2 unter Verwendung des Strahlteilers 15 und des Umlenkspiegels 16. Die zweite Optik 17 fokussiert den kohärenten Lichtstrahl 14 in der Fourier-Ebene 18. Damit entsteht in der Fourier-Ebene 18 das Fourier-transformierte Bild 20 der elektrischen Signale 1 bzw. binären Signale 23 des Streulichts 8. Das Fourier-transformierte Bild 20 zeigt ein in einer Linie angeordnetes Punktemuster oder zwei Punkte-Linien, die sich unter einem sehr spitzen Winkel schneiden. Dabei sind jeweils um einen mittleren Punkt die anderen Punkte symmetrisch angeordnet. Der Abstand zwischen dem mittleren Punkt und einem der beiden äußeren Punkte ist proportional der Geschwindigkeit. Das Fourier-transformierte Bild 20 wird von dem optischen Sensor 19 aufgenommen und als Ausgangssignal 21 dem Auswerterechner 22 zugeführt. Dieser Auswerterechner 22 berechnet letztendlich aus dem Abstand der Punkte des Fourier-transformierten Bildes 20 die Strömungsgeschwindigkeit. Diese Rechnung erfolgt in einem Bruchteil von einer Sekunde.

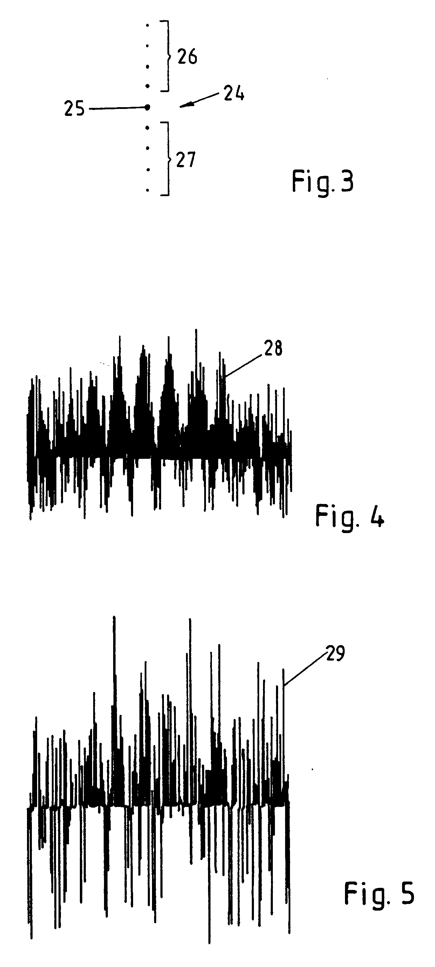

In Fig. 3 ist ein Punktemuster 24 gezeigt, wie es sich als Fourier-transformiertes Bild 20 des elektrischen Signals 1 ergibt. Um einen mittleren Punkt 25 sind die benachbarten Punkte 26 und 27 symmetrisch angeordnet. Der Punkt 25 weist die höchste Helligkeitsintensität auf. Die Helligkeitsintensität der Punkte 26 und 27 nimmt mit steigendem Abstand von dem Punkt 25 ab.

Die Figuren 4 und 5 zeigen elektrische Signale 28 und 29, die stark verrauscht sind. Solche elektrischen Signale 28 , 29 treten bei Messungen unter schwierigen Bedingungen auf. Solche Bedingungen sind beispielsweise die Messungen in der Nähe von Wänden oder aber in Strömungen mit sehr hohen Geschwindigkeiten. Bei dem elektrischen Signal 28 gemäß Fig. 4 könnte man noch von einer gewissen Periodizität ausgehen, bei dem elektrischen Signal 29 gemäß Fig. 5 dagegen scheint nur ein wahlloses "Rauschen" vorzuliegen. Sowohl das elektrische Signal 28 als auch das elektrische Signal 29 wären mit den im Stand der Technik bekannten Countern nicht mehr auswertbar. Bezüglich des elektrischen Signals 29 erscheint es zumindest fragwürdig, ob eine Auswertung mit den im Stand der Technik bekannten Array-Prozessoren noch zuverlässig möglich wäre. Im Gegensatz dazu bereitet die Auswertung der elektrischen Signale 28 und auch 29 mit dem erfindungsgemäßen Verfahren keinerlei Schwierigkeiten. Dies ist auf die wesentlich vergrößerte Stützstellenzahl, also auf die Anzahl der auszuwertenden Punkte des elektrischen Signals 28 bzw. 29 zurückzuführen. Die Stützstellenzahl ergibt sich aus der Güte des Lichtmodulators 13, d.h. aus der Anzahl der auf dem Lichtmodulator 13 darstellbaren Punkte. Es ist im Vergleich zu dem im Stand der Technik bekannten Prozessor eine Erhöhung der Stützstellenzahl um etwa den Faktor 10³ ohne weiteres möglich. Eine weitere Verbesserung des Lichtmodulators 13 würde eine weitere Erhöhung erlauben. Die Auswertung mit dieser großen Anzahl von Stützstellen ermöglicht es erst, stark verrauschte Signale für Messungen heranzuziehen bzw. Messungen in solchen Gebieten durchzuführen, in denen starkes Rauschen auftritt.

## Patentansprüche

1. Verfahren zur Messung der Strömungsgeschwindigkeit, insbesondere in einem Windkanal, bei dem ein sich kreuzendes Lichtstrahl-Paar (3) ein Meßvolumen (5) ausleuchtet und ein an mit der Strömung mitbewegten Teilchen (6) gestreutes dopplerverschobenes Streulicht (8) registriert und in elektrische Signale (1) umgewandelt wird und bei dem die Dopplerfrequenz des registrierten Streulichts (8) als Maß für die Strömungsgeschwindigkeit verwendet wird, dadurch gekennzeichnet, daß die elektrischen Signale (1, 28, 29) des registrierten Streulichts (8) in Form eines Bildes dargestellt werden, daß das Bild von einem kohärenten Lichtstrahl (14) durchleuchtet wird, daß der kohärente Lichtstrahl (14) in einer Fourier-Ebene (18) fokussiert wird und somit ein ein Punktemuster (24) aufweisendes fouriertransformiertes Bild (20) der elektrischen Signale (1, 28, 29) erzeugt wird, und daß das fouriertransformierte Bild (20) aufgenommen und weiterverarbeitet wird.

2. Verfahren nach Anspruch 1, dadurch gekennzeichnet, daß die elektrischen Signale (1, 28, 29) breitbandig gefiltert und/oder in binäre Signale (23) umgewandelt werden und daß die breitbandig gefilterten und/oder binären Signale (23) als Bild dargestellt werden.

3. Verfahren nach Anspruch 1 oder 2, dadurch gekennzeichnet, daß die elektrischen Signale (1, 28, 29) und/oder die binären Signale (23) zwischengespeichert werden.

4. Verfahren nach einem oder mehreren der Ansprüche 1 - 3, dadurch gekennzeichnet, daß die Auflösung des Bildes entsprechend der jeweils auftretenden Dopplerfrequenz durch Darstellung in einer Ebene, die mit der optischen Achse des kohärenten Lichtstrahls (14) einen Winkel größer oder kleiner als 90° bildet, erhöht und der zu messenden Geschwindigkeit angepaßt wird.

5. Vorrichtung zur Durchführung des Verfahrens nach einem oder mehreren der Ansprüche 1 bis 4, mit einer Lichtquelle (2), einer ersten, den Lichtstrahl (3) im Meßvolumen (5) fokussierenden und das Streulicht (8) aufnehmenden Optik (4), einer das registrierte Streulicht (8) in elektrische Signale (1) umwandelnden Konvertereinheit (9) und einer die elektrischen Signale (1) weiterverarbeitenden und als Geschwindigkeiten darstellenden Auswerteeinheit, die einen von einem kohärenten Lichtstrahl (14) durchleuchteten, über die elektrischen Signale (1) des Streulichts ansteuerbaren Lichtmodulator (13), eine zweite Optik (17) und einen optischen Sensor (19) aufweist, dadurch gekennzeichnet, daß ein zur Darstellung der elektrischen Signale (1) des Streulichts in Form eines transparenten Bilds geeigneter Lichtmodulator (13), z. B. ein LCD- Schirm, vorgesehen ist, daß die zweite Optik (17) zur Fokussierung des aus dem Lichtmodulator (13) austretenden Lichtstrahls in der Fourierebene (18) vorgesehen ist, daß der optische Sensor (19) zum Empfangs eines fouriertransformierten Bilds (20) in der Fourierebene angeordnet ist und daß ein die Ausgangssignale (21) des optischen Sensors (19) aufnehmender und weiterverarbeitender Auswerterechner (22) vorgesehen ist.

6. Vorrichtung nach Anspruch 5, dadurch gekennzeichnet, daß als Lichtmodulator (13) ein LCD-Schirm und ein dem LCD-Schirm vorgeschalteter LCD-Controller (12) vorgesehen ist.

7. Vorrichtung nach Anspruch 5 oder 6, dadurch gekennzeichnet, daß die Auswerteeinheit einen Filter (10) und/oder eine Digitalisierungseinheit (11) aufweist.

8. Vorrichtung nach einem oder mehreren der Ansprüche 5 - 7, dadurch gekennzeichnet, daß eine Speichervorrichtung zur Aufnahme der elektrischen Signale (1, 28, 29) des registrierten Streulichts (8) vorgesehen ist.

9. Vorrichtung nach einem oder mehreren der Ansprüche 5 -8, dadurch gekennzeichnet, daß an dem Iichtmodulator (13) eine Winkelverstelleinrichtung vorgesehen ist und daß die Winkelverstelleinrichtung eine mit dem Auswerterechner (22) direkt verbundene Winkelmeßvorrlchtung aufweist.

10. Vorrichtung nach einem oder mehreren der Ansprüche 5 - 9, dadurch gekennzeichnet, daß als Lichtquelle (2) ein Laser angeordnet ist und daß dem Laser zur Aufspaltung in den Lichtstrahl (3) und den kohärenten Lichtstrahl (14) ein Strahlteiler (15) und ein Umlenkspiegel (16) zugeordnet sind.

## Claims

1. Method for measuring flow velocity, in particular in a wind tunnel, in which a pair of intersecting light beams (3) illuminates a measurement volume (5) and Doppler-shifted scattered light (8) scattered on particles (6) entrained with the flow is recorded and converted into electrical signals (1), and in which the Doppler frequency of the recorded scattered light (8) is used as a measure of the flow velocity, characterised in that the electrical signals (1, 28, 29) of the recorded scattered light (8) are represented in the form of an image, in that the image is transilluminated by a coherent light beam (14), in that the coherent light beam (14) is focused in a Fourier plane (18) and thus a Fourier-transformed image (20) of the electrical signals (1, 28, 29) is produced which has a point pattern (24), and in that the Fourier-transformed image (20) is recorded and further processed.

2. Method according to Claim 1, characterised in that the electrical signals (1, 28, 29) are broadband filtered and/or converted into binary signals (23), and in that the broadband-filtered and/or binary signals (23) are represented as an image.

3. Method according to Claim 1 or 2, characterised in that the electrical signals (1, 28, 29) and/or the binary signals (23) are temporarily stored.

4. Method according to one or more of Claims 1 - 3, characterised in that the resolution of the image is increased in accordance with the respectively occurring Doppler frequency by representation in a plane which forms with the optical axis of the coherent light beam (14) an angle greater or less than 90° and is adapted to the velocity to be measured.

5. Device for carrying out the method according to one or more of Claims 1 to 4, having a light source (2), a first optical system (4) which focuses the light beam (3) in the measurement volume (5) and receives the scattered light (8), a converter unit (9) which converts the recorded scattered light (8) into electrical signals (1), and an evaluation unit which further processes the electrical signals (1), represents them as velocities, and has a light modulator (13) which is transilluminated by a coherent light beam (14) and can be driven by the electrical signals (1) of the scattered light, a second optical system (17) and an optical sensor (19), characterised in that a light modulator (13), for example an LCD screen, is provided which is suitable for representing the electrical signals (1) of the scattered light in the form of a transparent image, in that the second optical system (17) is provided for focusing the light beam emerging from the light modulator (13) in the Fourier plane (18), in that the optical sensor (19) is arranged to receive a Fourier-transformed image (20) in the Fourier plane, and in that an evaluation computer (22) is provided which records and further processes the output signals (21) of the optical sensor (19).

6. Device according to Claim 5, characterised in that an LCD screen and an LCD controller (12) upstream of the LCD screen are provided as light modulator (13).

7. Device according to Claim 5 or 6, characterised in that the evaluation unit has a filter (10) and/or a digitising unit (11).

8. Device according to one or more of Claims 5 - 7, characterised in that a storage device is provided for recording the electrical signals (1, 28, 29) of the recorded scattered light (8).

9. Device according to one or more of Claims 5 - 8, characterised in that an angle adjuster is provided on the light modulator (13), and in that the angle adjuster has a goniometer directly connected to the evaluation computer (22).

10. Device according to one or more of Claims 5 - 9, characterised in that a laser is arranged as light source (2) and in that the laser is assigned a beam splitter (15) and a deflecting mirror (16) for the division into the light beam (3) and the coherent light beam (14).

## Revendications

1. Procédé de mesure de la vitesse d'un fluide, en particulier dans un tunnel aérodynamique, dans lequel une paire de faisceaux lumineux croisés (3) éclaire un volume de mesure (5) et une lumière diffuse (8) diffusée sur des particules (6) entraînées par le fluide et décalée par effet Doppler est saisie et transformée en signaux électriques (1), et dans lequel la fréquence Doppler de la lumière diffuse saisie (8) est utilisée comme mesure de la vitesse du fluide,
**caractérisé** en ce que les signaux électriques (1, 28, 29) de la lumière diffuse saisie (8) sont représentés sous la forme d'une image, en ce que l'image est éclairée et traversée par un faisceau de lumière cohérente (14), en ce que le faisceau de lumière cohérente (14) est focalisé dans un plan de Fourier (18) et qu'ainsi est produite, par transformation de Fourier, une image (20) des signaux électriques (1, 28, 29), cette image présentant un dessin de points (24), et en ce que l'image (20) obtenue par transformation de Fourier est saisie et soumise à un traitement complémentaire.

2. Procédé selon la revendication 1, caractérisé en ce que les signaux électriques (1, 28, 29) sont filtrés en bande large et/ou convertis en signaux binaires (23), et en ce que les signaux filtrés en bande large et/ou les signaux binaires (23) sont représentés sous la forme d'une image.

3. Procédé selon la revendication 1 ou 2, caractérisé en ce que les signaux électriques (1, 28, 29) et/ou les signaux binaires (23) sont mis provisoirement en mémoire.

4. Procédé selon une ou plusieurs des revendications 1 à 3, caractérisé en ce que la résolution de l'image est accrue et adaptée à la vitesse à mesurer, de manière correspondant à la fréquence Doppler intervenant dans chaque cas, par représentation dans un plan qui forme avec l'axe optique du faisceau de lumière cohérente (14) un angle supérieur ou inférieur à 90°.

5. Dispositif de mise en oeuvre du procédé selon une ou plusieurs des revendications 1 à 4, avec une source de lumière (2), un premier système optique (4) focalisant le faisceau lumineux (3) dans le volume de mesure (5) et saisissant la lumière diffuse (8), un convertisseur (9) convertissant la lumière diffuse saisie (8) en signaux électriques (1), et une unité d'exploitation pour le traitement complémentaire des signaux électriques (1) en les représentant sous la forme de vitesses, cette unité présentant un modulateur de lumière (13) éclairé et traversé par un faisceau de lumière cohérente (14), pouvant être commandé d'après les signaux électriques (1) de la lumière diffuse, un deuxième système optique (17) et un capteur optique (19),
**caractérisé** en ce qu'il est prévu, pour représenter les signaux électriques (1) de la lumière diffuse sous la forme d'une image transparente, un modulateur de lumière (13) approprié à cet effet, par exemple un écran à cristaux liquides, en ce que le deuxième système optique (17) est prévu pour focaliser dans le plan de Fourier (18) le faisceau lumineux sortant du modulateur de lumière (13), en ce que le capteur optique (19) destiné à recevoir une image (20) obtenue par transformation de Fourier est disposé dans le plan de Fourier, et en ce qu'il est prévu un calculateur d'exploitation (22) recevant les signaux de sortie (21) du capteur optique (19) et effectuant un traitement complémentaire de ces signaux.

6. Dispositif selon la revendication 5, caractérisé en ce qu'un écran à cristaux liquides et un contrôleur d'écran (12) disposé en amont de l'écran à cristaux liquides sont prévus en tant que modulateur de lumière.

7. Dispositif selon la revendication 5 ou 6. caractérisé en ce que l'unité d'exploitation présente un filtre (10) et/ou une unité de digitalisation (11).

8. Dispositif selon une ou plusieurs des revendications 5 à 7, caractérisé en ce qu'il est prévu une mémoire pour recevoir les signaux électriques (1, 28, 29) de la lumière diffuse saisie (8).

9. Dispositif selon une ou plusieurs des revendications 5 à 8, caractérisé en ce qu'un dispositif de réglage angulaire est prévu sur le modulateur de lumière (13), et en ce que ce dispositif de réglage angulaire présente un dispositif goniomètrique relié directement au calculateur d'exploitation (22).

10. Dispositif selon une ou plusieurs des revendications 5 à 9, caractérisé en ce qu'un laser est disposé en tant que source de lumière (2), et en ce qu'un diviseur de faisceau (15) et un miroir de renvoi (16) sont associés au laser pour la séparation en faisceau de lumière (3) et en faisceau de lumière cohérente (14).
